# EUROPEAN PATENT SPECIFICATION

(11) **EP 1 709 548 B1**
(45) Date of publication and mention of the grant of the patent: **27.02.2008**
(21) Application number: 05708138.2
(22) Date of filing: 28.01.2005
(51) Int. Cl.: G06F 15/177, H04L 12/24, H04Q 7/32

(54) **DEFINING NODES IN DEVICE MANAGEMENT SYSTEM**
DEFINIEREN VON KNOTEN IN EINEM VORRICHTUNGSVERWALTUNGSSYSTEM
DEFINITION DE NOEUDS DANS UN SYSTEME DE GESTION DE DISPOSITIFS

(30) Priority: 30.01.2004 FI 20040141
(43) Date of publication of application: 11.10.2006
(73) Proprietor: Nokia Corporation, 02150 Espoo (FI)
(72) Inventor: SAHINOJA, Mikko, FI-33580 Tampere (FI); PIISPANEN, Jussi, FI-33610 Tampere (FI)
(74) Representative: Smolander, Jouni Juhani
(86) International application number: PCT/FI2005/000057
(87) International publication number: WO 2005/073868

(56) References cited:
- US-A1- 2003 069 941
- US-A1- 2003 204 640
- 'Indication for case sensitivity' OMA (OPEN MOBILE ALLIANCE), [Online] 13 July 2004, XP002986145 Retrieved from the Internet: <URL:www.openmobilealliance.org> [retrieved on 2005-05-13]
- 'Indication for case sensitivity' OMA (OPEN MOBILE ALLIANCE), [Online] 21 April 2004, XP002986146 Retrieved from the Internet: <URL:www.openmobilealliance.org> [retrieved on 2005-05-13]
- 'SyncML Device Management Tree and Description, Version 1.1.2' OMA (OPEN MOBILE ALLIANCE), [Online] 02 December 2003, XP002986147 Retrieved from the Internet: <URL:www.openmobilealliance.org> [retrieved on 2005-05-13]

## Description

### FIELD OF THE INVENTION

The invention relates to defining the nodes of a management structure used in device management in a device management system.

### BACKGROUND OF THE INVENTION

As different data processing devices, such as mobile stations, become more complex, the significance of device management becomes more pronounced. Devices require several different settings, such as settings related to Internet access points, and setting them manually by the user is arduous and difficult. To solve this problem, for instance, device management solutions have been developed so that the administrator of a company's information system or a teleoperator can set an appropriate configuration in the device. Device management generally refers to actions by which a person not using the device can change the configuration of the device; for instance change the settings or even a protocol used by the device. In addition to device-specific settings, it is also possible to transmit user-specific data, such as user profiles, logos, ringing tones, and menus with which the user can personally modify the settings of the device, or the modification takes place automatically in connection with device management.

One of the device management standards is OMA (Open Mobile Alliance) DM (Device management), which is partly based on the SyncML (Synchronization Markup Language) protocol. For instance, a personal computer (PC) can act as a device management server in a device management protocol and a mobile station as a device management client. In terms of device management, the device management client transmits information concerning itself in a session initiation message to the device management server, and the device management server replies by transmitting its own information and server management commands. The device management client replies to these with status information, after which the server can end the session or transmit more server management commands. If the server transmits more server management commands, the client is to reply to them with status information. The server can always, after receiving status information, end the session or continue it by transmitting more server management commands. Device management can also be implemented by first transmitting queries to the user on what s/he wants to update, and information on the user's selections is transmitted to the server. After this, the server can in the next packet transmit the updates/commands the user wants.

The items managed in the device management client are arranged as management objects. The management objects are entities that can be managed by server management commands in the device management client. The management object can for instance be a number or a large entity, such as background image or screensaver. At least some of the management objects can be standardized; the OMA DM device management standards include three standardized management objects at the moment.

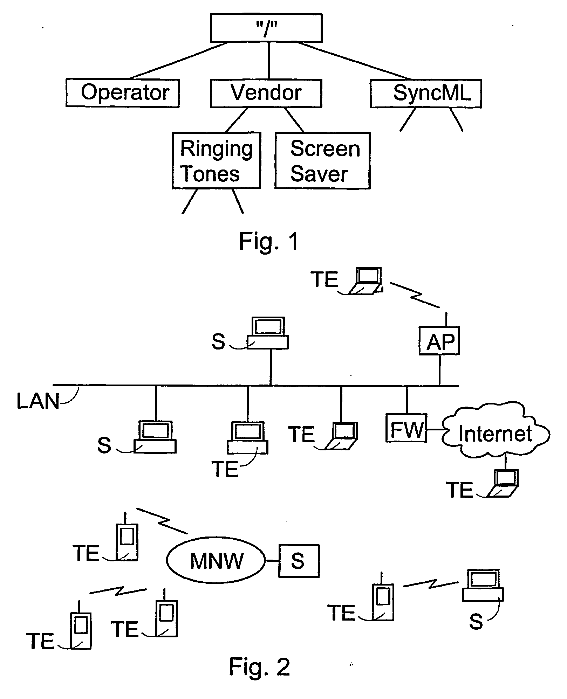

In OMA device management, the management objects are arranged in a management tree, which is illustrated in Figure 1. The management tree is made up of nodes and defines at least one management object formed of one or more nodes or at least one parameter of a node. The following examines nodes that form the management objects. The node can be an individual parameter, subtree or data collection. For instance, a "Vendor" node is an interior node, because it has child objects, "ScreenSaver" and "RingingTones". "ScreenSaver" is a leaf node, because it does not have child objects. "RingingTones" is also an interior node, because it has child objects. The node may comprise at least one parameter that may be a configuration value or a file, such as a background image file in the node "ScreenSaver". The content of the node can also be a link to another node. Each node can be addressed by a uniform resource identifier (URI). URI of a node is formed starting from the root "/", and when proceeding along the tree, each node has a name that is added to the earlier ones using "/" as the separator. For instance, the node "RingingTones" can be addressed by URI "/Vendor/RingingTones/". The nodes can be fixed or dynamic. The device management client or server can add dynamic nodes to the management tree.

The OMA DM device management standards define that the management tree must be case sensitive. Some environments do not distinguish between upper-case letters or lower-case letters (case insensitive); for instance, path names are case insensitive. Information in this kind of environment may also be necessary to store into the OMA DM device management tree; for instance, a specific directory structure should be added to the device management tree as information managed according to the OMA DM device management standard. This may, however, cause problems, because a case insensitive system may change file names and/or nodes cannot be referred to correctly in the device management tree. The directory structure of an operating system, for instance, cannot be directly modelled to the management tree, and a voluminous mapping table may be needed to verify the information in the management tree.

### BRIEF DESCRIPTION OF THE INVENTION

A method, device management system, data processing device, computer program product and data structure have now been developed, which are characterized by what is stated in the independent claims. Some embodiments of the invention are described in the dependent claims.

According to the invention, at least one node is associated with case sensitivity information that defines whether to distinguish between upper-case letters and lower-case letters. A management structure node can then be defined (in the device management client and/or server) according to the case sensitivity information.

The node generally refers to a device management entity that is configurable by a third party, such as the settings of an Internet access point, without being limited to the OMA device management nodes. The management structure can correspondingly be any structure containing nodes, without being limited to the device management trees of OMA device management. The case sensitivity information refers to any direct or indirect information associated with at least one node that defines whether to distinguish between upper-case letters and lower-case letters.

The invention makes it possible to define, even specifically for each node, whether to distinguish between upper-case letters and lower-case letters. This way, it is possible to avoid mistakes when working with environments that are case insensitive, and to define the nodes associated with these systems as case insensitive. For instance, the correct node can be found in the management structure regardless of the format (concerning case sensitivity) indicated by the search request, when, according to the case sensitivity information, all nodes with the same name are searched without separating upper-case letters and lower-case letters.

According to one embodiment of the invention, node characteristics are defined in a device description for a management structure formed for at least one device to be managed, and the device description comprises said information for at least one node. The case sensitivity information can then be checked from the device description, and it is not necessary to store entire management structures on the management server, or fetch them from the client.

According to another embodiment, the case sensitivity information associated with a first node is also set to apply to a second node. In such a case, the case sensitivity information of the first node is checked when there is a need to check the case sensitivity information of the second node, and the second node is defined according to the case sensitivity information associated with the first node. With this embodiment, it is possible to reduce the amount of stored information, because it is not necessary to store the case sensitivity information separately for each node.

### BRIEF DESCRIPTION OF THE FIGURES

The invention will now be described in greater detail by means of preferred embodiments and with reference to the attached drawings, in which
Figure 1 illustrates a management tree,
Figure 2 illustrates a management system, and
Figures 3a and 3b illustrate a method according to an embodiment of the invention.

### DETAILED DESCRIPTION OF THE INVENTION

One embodiment of the invention is described in the following in a system supporting OMA device management; it should, however, be noted that the invention can be applied to any device management system, in which the device management objects can also be organized in other than tree structures.

Figure 2 illustrates a networked system. A network server or a PC typically serves as the server S. A mobile station, PC, laptop computer, or PDA (Personal Digital Assistant) device typically serves as the terminal TE. In the following embodiments, it is assumed that for device management, the terminal TE serves as the device management client and the server S as the device management server. The server S can manage several clients TE.

Figure 2 shows two examples, in the first of which clients TE and management servers S are connected to a local area network LAN. A client TE connected to the network LAN comprises a functionality, such as a with the devices in the network LAN. The local area network LAN can be any kind of local area network and TE can also be connected to the server S through the Internet typically using a firewall FW. The terminal TE can also be connected to the local area network LAN wirelessly through an access point AP.

In the second example, the client TE communicates with the server S through a mobile network MNW. A terminal TE connected to the network MNW comprises a mobile station functionality for communicating wirelessly with the network MNW. There may also be other networks, such as a local area network LAN, between the mobile network MNW and server S. The mobile network MNW can be any known wireless network, for instance a network supporting GSM services, a network supporting GPRS (General Packet Radio Service) services, a third-generation mobile network, such as a network according to the network specifications of 3GPP (3^{rd} Generation Partnership Project), a wireless local area network WLAN, a private network, or a combination of several networks. One important service of the transport layer in many mobile networks is WAP that comprises a WSP (Wireless Session Protocol) layer with which a transport service can be provided for a device management application layer in a client TE and server S. The system then comprises at least one WAP gateway and possibly one or more WAP proxies. Other protocols can also be used to transport device management messages. The lower-layer transport techniques can be circuit- or packet-switched SMS-based message transmission in accordance with the properties of the underlying mobile network MNW. in addition to the earlier examples, many other device management configurations are also possible, such as a management connection between terminals TE or a direct management connection between the terminal TE and server S by using a wireless or wire connection without any other network elements.

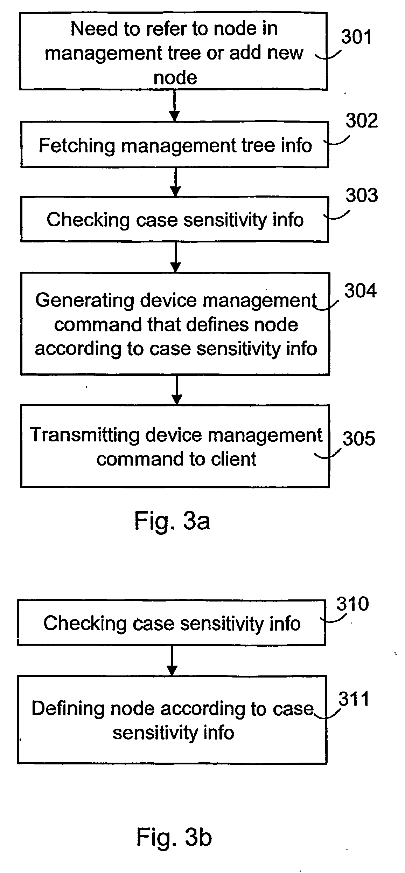

The terminal TE and server S comprise memory, a user interface, I/O means for data transmission, and a central processing unit comprising one or more processors. The memory has a non-volatile portion for storing applications controlling the central processing unit and for other information that needs storage, and a volatile portion for use in processing temporary data. The management tree is stored in the memory in the terminal TE, and information and/or device description thereof is also stored in the memory of the server S. A terminal TE serving as an OMA device management client comprises a client agent that takes care of functions related to the management session in the client. A server S serving as a device management server comprises a server agent or server master managing the management session. The client agent can be implemented by executing in TE's central processing unit a computer program code stored in the memory, and the server agent or server master can be implemented by executing in S's central processing unit a computer program code stored in the memory. As already stated, TE and S can serve as a device management server and/or client. Thus, the terminal TE can also comprise at least partly the functions of the server agent so as to be able to serve as a management server in device management between terminals TE. The computer program codes executed in the central processing unit can make the server S, for instance the server agent, also to implement the inventive means for defining nodes and for case separation, some embodiments of which are illustrated in connection with Figure 3a. The computer program codes executed in the central processing unit of the terminal TE can cause the terminal TE, for instance the client agent, also to implement in the client the inventive means for defining nodes and for case separation, some embodiments of which are illustrated in connection with Figure 3b. The computer program can be stored on any storage medium, such as the PC hard disk or CD-ROM disk, from which it can be loaded into the memory of the device TE; S running it. The computer program can also be loaded through the network by using a TCP/IP protocol stack, for instance. It is also possible to use hardware solutions or a combination of hardware and software solutions to implement the inventive means. The data structure comprising case sensitivity information can be transferred over a data transmission network, for instance, to the server S and stored in the memory of the server S.

Figure 3a illustrates a method of an embodiment, which can be performed in the management server S. In step 301, there is a need to add at least one new node to the management tree of the device management client (TE) being managed, or to point to an already existing node in a management command to be transmitted from the management server S. The server S then fetches 302 the information concerning the management tree, at least the information on the node to be referred to or the node under which the new node is to be added. The information on the management tree can be stored in the memory of the server S or the server S can fetch them from an external device, for example over the Internet from a server maintained by the hardware manufacturer. According to one embodiment, the information concerning the management tree can also be obtained from the client TE, for instance by contacting the client TE and requesting them in the beginning of the device management session, or by browsing the contents of the management tree in the client TE. The information concerning the management tree can be obtained directly from the management tree information describing the management objects of the client TE (a copy of at least a part of the management tree can be stored on the server S) or the device description describing the structure of the device, which is later described in more detail.

In the present arrangement, case sensitivity information is associated with at least one node to define whether to distinguish between upper-case letters and lower-case letters. In step 303, the case sensitivity information, which applies to at least the node to be added or referred to, is checked from the management tree information. The case sensitivity information thus defines whether to distinguish between upper-case letters and lower-case letters or not, and it may be defined in many different ways to possibly apply to several different nodes, as illustrated later. Step 304 defines the management command that comprises the information of the node to be added to the management tree or referred to. A new node can have any object type, such as interior node or leaf node. In the case of a new node, the management command can for instance be 'ADD', with which it is possible to add a new node to the management tree, or in the case of an existing node 'GET', which indicates in its <Target> element the Uniform Resource Identifier <LocURI> of the node whose information is to be fetched.

The management server S is in step 304 specifically arranged to define the name of the node (for instance in the <LocURI> element) by taking into consideration the case sensitivity information: if according to the case sensitivity information upper-case letters and lower-case letter are to be separated in the nodes (case sensitive), the name of the node can be defined using both upper-case and lower-case letters. Then, if the server S maintains in its memory information on the nodes of the management tree of the terminal, the server S shall, when adding a new node, also store the name of the node in exactly the same format also separating the upper-case and lower-case letters. In this case, the server S processes the upper-case and lower-case formats of the same letter as different letters, in which case a new node replaces an existing node only, if the upper-case and lower-case letters in the names match exactly. For instance, the node "Screensaver" does not replace the node "ScreenSaver". Naturally, this also means that the upper-case and lower-case letters are distinguishable in the name of the stored node next time when information on the node is fetched. However, if according to the case sensitivity information, the upper-case and lower-case letters are not to be separated, a node name comprising the same letters is interpreted as the same regardless of whether the letters are entered in a different way in upper-case and lower-case letters. This, thus, means that for instance a node of the management tree having the same letters as in the node defined in the 'ADD' management command is always replaced by the node defined in the management command. By utilizing the case sensitivity information, it is, thus, possible to avoid mistakes in processing upper-case and lower-case letters in differing systems, because the nodes are defined in the same manner depending on the case sensitivity information. It is possible that in this case, the name of the node to be defined (in the management command and in the node information possibly stored into the memory of the server S) does not contain a mixture of upper-case letters and lower-case letters, but only either upper-case letters or lower-case letters, in which case it is further possible to reduce the possibility of problems especially if the devices in question are ones that do not support the use of case sensitivity information. Thus, the server S should define the name of the node in accordance with the case sensitivity information when performing any device management command in the management tree of the management device TE.

The management server S can transmit 305 a management package containing or identifying at least one node to the management client TE. The management package can for instance comprise an 'ADD' command for new nodes, in which case TE adds the information defined in the nodes into its memory and updates the management tree. In step 305, it is possible to utilize the mechanisms of the device management protocol and the messages defined for it; for a more detailed description of the OMA device management protocol and other commands, for instance, reference is made to the OMA specification *"*SyncML Device Management Protocol", version 1.1.2, 12 June 2003, 41 pages, and the OMA specification *"*SyncML Representation Protocol Device Management Usage", version 1.1.2, 12 June 2003, 39 pages. In chapter 6.5, the latter specification defines the different protocol operation elements with which the management server S can define management commands to the management tree of the management client TE.

From device management viewpoint, the client device (TE) is also arranged to take into account the case sensitivity information associated with one or more nodes, and to distinguish between upper-case letters and lower-case letters accordingly, or to consider them equal when processing the nodes, for instance when storing a new node to the management tree. The management client, such as terminal equipment TE, can apply the features illustrated in Figure 3b. Step 310 checks the case sensitivity information associated with the node being processed, according to which the node is defined in the management tree in step 311. According to an embodiment, step 310 can be started, when a management command is received from the management server (S). The management client TE is then arranged to check the case sensitivity information associated (directly or indirectly) with the node identified in the management command. The management client TE can then compare the node identifier with the identifiers of the nodes already in the management tree either taking into consideration or ignoring the differences in the lower-case and upper-case letters.

One example is a situation, in which the ADD command is received for a node and the management tree already has a node with the same name, but the name (e.g. Abc) of the node in the management tree and the name (aBc) of the node in the management command differ in the use of lower-case and upper-case letters. If the properties of the node in the management tree define case sensitivity for upper-case and lower-case letters, the management client TE adds, in step 311, the node 'aBc' as a new node in addition to the node 'Abc'. If no case sensitivity is defined, the management client TE replies to the ADD command by an error message that indicates that the node defined in the ADD command already exists in the management tree. Thus, the management client TE can take case sensitivity into account when executing management commands, and define the node in/to the management tree. In another example, the management client TE can fetch in a corresponding manner in response to a GET command the information of the node in the management tree by taking into consideration the case sensitivity information of the node to be fetched: If case insensitivity is defined for the node 'aBc' indicated by the GET command, the management client TE then fetches the information of the node 'Abc' from the management tree and returns them in response to the GET command. This way, it is also possible to avoid problems caused by differences in distinguishing upper-case and lower-case letters in the management client TE, and it is able to execute the management commands of the management server S correctly by distinguishing the nodes according to the case sensitivity information. In addition to the above ADD and GET command examples, the management client TE can take into consideration the case sensitivity information when processing any management command received from the management server S or any command received from somewhere else (e.g. user interface) to refer to, add or modify a node of the management tree. One example is the loading of a new application into the management client TE, in which case the information managed by the application can also be defined in the management tree in accordance with the case sensitivity information. According to one embodiment, the management client TE is also arranged to transmit the case sensitivity information associated with the node to the management server S in response to a fetch request for the node, for instance when the management server fetches a part of the management tree. The adding, deleting and/or modifying of the case sensitivity information can also be arranged in the management client TE.

As described in the OMA DM specification *"SyncML Device Management Tree and Description",* version 1.1.2, 12 June 2003, 44 pages, chapter 9, different equipment manufacturers can by using the DTD (Document Type Description) of the standardized device description framework (DDF) form for the management server S a device description of the device (TE) to be managed, which comprises device-specific property information.

According to one embodiment, device descriptions are documents based on the XML language. For the XML-based documents, a document type definition DTD is made, which in the XML language defines the tags to be used, the structural relations of the elements (!ELEMENT) between the identifiers, and other XML document definitions to be used. As is well known in the XML language, the data element begins with an initial identifier (e.g. <section>) and ends in an end identifier (</section>), and it may contain text or other elements. DTD is in every transmitted document, or they refer to an already known DTD. According to one embodiment, the device description is defined on the basis of the DTD model defined in the OMA device management specification. The DTD model and the device description based thereon define especially elements to identify the equipment manufacturer and the device type and the properties of the nodes definable to the device. Node-specific information defines, among other things, the name of the node, the path to the node, run-time properties of the node and stable node information for the management server. Instead of this type of device description, the invention can also well be applied to other types of device descriptions; for instance, it is possible to use other device description frameworks, such as RDF (Resource Description Framework), CC/PP (Composite Capability / Preference Profiles), CIM (Common Information Model), GUP (Generic User Profile, XML Schema, and UML (Unified Modelling Language).

The DTD model of the device description defines the XML elements to which the equipment manufacturer can define the properties of the device type in question and thus create the device description. On the basis of the device description, the management server S is able to transmit management commands to different devices TE serving as device management clients. In the device description, especially the internal software structure of the management client in the form of the objects to be managed can be defined. The property information can for instance contain, specifically for each node, information on whether the device (more specifically the node to be defined) supports the use of a time stamp (when the node has last been changed), or what MIME types does the node support. The device descriptions are typically specific for each device type and can be defined by the manufacturer already during manufacturing. When the device description is defined, it can be stored into the memory of the management server S, for instance. According to an embodiment, it is also possible to create or modify the device description in the management client TE. For instance, when the software of the management client TE is updated or a new software component is added, it is also possible to define the device description in the management client TE and to store it at least in the memory of TE. With reference to Figure 3, in step 302, the server S can fetch from its memory at least part of the device description on the basis of the device identifier, such as manufacturing identifier and device type identifier. The device description can alternatively be fetched from another device, even from the management client TE being managed.

According to one embodiment, case sensitivity information is defined in the device description for at least one node. In such a case, DTD of the device description document can already contain one or more elements or fields for the definition of case sensitivity information. The management server S can check the case sensitivity information from the device description in step 303 of Figure 3.

According to one embodiment, case sensitivity information is defined in the run-time properties of the node, i.e. in the node-specific RTProperties element of the device description of OMA device management, in which case the device description can contain a new element for the definition of case sensitivity information. The case sensitivity information is then a node property to which it is possible to direct at least the fetch command 'GET' and according to one embodiment also the replace command 'REPLACE' for altering the content of the case sensitivity information field. By way of example, a DTD is shown below with respect to the RTProperties element containing the above-mentioned case sensitivity information.
<!ELEMENT RTProperties (ACL, Format, Name, Size?, Title?, TStamp?, Type, VerNo?, CSen)>

The element 'CSen' has been added to DTD to define case sensitivity information. The value of the CSen element can be 'Case Sensitivity' (upper-case and lower-case letters are to be separated) or 'Case Insensitivity' (upper-case and lower-case letter are not to be separated) or an abbreviation or a number, for instance, on the basis of which the server S knows which of the case sensitivity settings applies. The CSen element of a node in a device description document can thus include information on whether to distinguish between upper-case and lower-case letters, and the management server S is arranged to check the content of the CSen element in step 303. The management server S defines in step 304 the node into the device management command according to the value of the CSen element. According to one embodiment, the content of the CSen element can be fetched (in step 302/303) from the management tree in the same manner as other properties associated with the management tree node as described in the OMA DM specification *"SyncML Device Management Tree and Description",* version 1.1.2, chapter 7.3.

According to one embodiment, case sensitivity information is defined in the Type sub-element of the RTProperties element, which defines whether the node in question supports the use of the Type property. Case sensitivity information can then also be defined as the value of the Type element. According to yet another embodiment, case sensitivity information can be defined on a higher level as a new child element of the 'Node' element (which comprises the RTProperties element).

Case sensitivity information can be defined in many different ways, for instance in such a manner that case sensitivity and case insensitivity have their own values. According to another embodiment, only one of these alternatives, for instance case insensitivity, has its own value or flag. In such a case, case insensitivity is arranged only if said value is defined in the properties of the node. According to one embodiment, the case sensitivity information defined in the device description properties of one node or in other information defining the management tree of the management client TE and stored in the management server S affects at least one other node. This way, case sensitivity information need not be defined separately for every node. This embodiment can be implemented in many different ways: according to one embodiment, case sensitivity or insensitivity may be a default for one or more nodes of the entire directory tree, and this default is complied with until otherwise defined in the properties of a node. According to one embodiment, the case sensitivity information defined for a node also applies to the child nodes of the node. For instance, it is possible to define case sensitivity information to the root of the device management tree already in the device description, in which case it can be applied to the entire device management tree. If different case sensitivity information is separately defined in a child node, the defined case sensitivity can be applied at least to the child node in question. Thus, when proceeding along a branch of the management tree, the earlier defined case sensitivity information is valid until new case sensitivity information is defined in a node and can then also be used in the related child nodes. According to one embodiment, the element defining the case sensitivity information is inherited from one node to another in the same manner as the ACL (Access Control List) property, i.e. the server S is arranged to define for a node the case sensitivity information of the parent node, if the node does not have its own case sensitivity information.

According to one embodiment, case sensitivity information is defined as a new element in a standardized DevInfo management object (node) which each OMA DM management client must support and which describes the properties of the management client that are required for a successful device management session. In such a case, the device description (or DTD of the device description document) need not have an element for the definition of case sensitivity, but the case sensitivity information defined in the Devlnfo management object applies to all nodes in the management tree of the device. It should be noted that case sensitivity information affecting several nodes could be defined, instead of the DevInfo object, alternatively in another object describing device information or profile.

According to an alternative embodiment, case sensitivity information can also be defined in the framework properties of the device description for one or more nodes as a new element or framework property, for instance. The OMA DM specification *"SynchML Device Management Tree and Description",* version 1.1.2, chapter 9.3.4 describes the current framework properties.

According to yet another embodiment, recursion information is directly or indirectly (e.g. with the node where case sensitivity information is defined) associated with case sensitivity information, in which case the case sensitivity information can be replicated in the management tree when replicating nodes in accordance with the recursion information.

Case sensitivity information can already be defined in the device description made by the equipment manufacturer in such a manner, for instance, that in nodes comprising device-specific settings, upper-case and lower-case letters are always separated, but in other possibly added nodes, such as directory trees added by the management server S, upper-case and lower-case letters are not separated. According to one embodiment, the management server S can change the case sensitivity information or define it for new nodes (e.g. those not described in the device description), such as nodes describing the structure of the file system. This embodiment can be useful if the management server S cannot for instance distinguish the differences between the lower-case and upper-case letters. According to another example, an application developer defines case sensitivity information for the application, i.e. when adding information required for application management to the management tree and/or device description, case sensitivity information is also defined in the information. After this, the information concerning the application can be managed in the manner illustrated above in accordance with the case sensitivity information.

It should be noted that the embodiments described above could also be applied in any combination thereof. Instead of the examples illustrated above, case sensitivity information can also be described as a parameter or sub-element of another node element in the management tree. It is apparent to a person skilled in the art that while the technology advances, the basic idea of the invention can be implemented in many different ways. The invention and its embodiments are thus not restricted to the examples described above, but can vary within the scope of the claims.

## Claims

1. A method for defining the nodes of a management structure used in device management in a device management system, **characterized in that**
at least one node is associated with case sensitivity information that defines whether to distinguish between upper-case letters and lower-case letters, and
at least one node is defined according to the case sensitivity information (304).

2. A method as claimed in claim 1, **characterized in that** the properties of at least one node are defined in a device description for a management structure formed for at least one device to be managed, and the device description comprises said information for at least one node, and
the case sensitivity information is checked from the device description (303).

3. A method as claimed in claim 1, **characterized in that**
the case sensitivity information is defined in a management structure describing the information of the device to be managed, and
the case sensitivity information is checked from the management structure (303).

4. A method as claimed in any one of the preceding claims, **characterized by**
defining the information of the node in the management command generated in a management server according to the case sensitivity information, and
transmitting the management command to the management client being managed (305).

5. A method as claimed in any one of the preceding claims, **characterized by**
checking (303) the case sensitivity information in response to a need to create a new node or to refer to a node already in the management structure, and defining the name of the node in accordance with the case sensitivity information by either distinguishing between the upper-case and lower-case letters, or not distinguishing between them (304).

6. A method as claimed in any one of the preceding claims, **characterized in that**
the case sensitivity information associated with a first node is set to also apply to a second node, and
the case sensitivity information of the first node is checked in response to a need to check the case sensitivity information of the second node, and
the second node is defined according to the case sensitivity information associated with the first node.

7. A device management system comprising at least a device management server (5) and at least one device management client (TE) to be managed, the device management system being arranged to manage at least one device management client by means of a management structure comprising at least one node, **characterized in that** at least one node is associated with case sensitivity information defining whether to distinguish between upper-case and lower-case letters, and
the device management system is arranged to define at least one node according to the case sensitivity information.

8. A data processing device arranged to define nodes of a management structure comprising information managed with a device management protocol,**characterized in that**
the data processing device is arranged to check the case sensitivity information associated with at least one node that defines whether to distinguish between upper-case and lower-case letters, and
the data processing device is arranged to define at least one node according to the case sensitivity information.

9. A data processing device as claimed in claim 8, **characterized in that** the properties of at least one node are defined in a device description for a management structure formed for at least one device to be managed, and the device description comprises the information for at least one node, and
the data processing device is arranged to check the case sensitivity information from the device description.

10. A data processing device as claimed in claim 8, **characterized in that** the case sensitivity information is defined in the management structure describing the information of the device to be managed, and
the data processing device is arranged to check the case sensitivity information from the management structure.

11. A data processing device as claimed in any one of claims 8 to 10, **characterized in that** the data processing device is arranged to check the case sensitivity information in response to a need to create a new node or refer to a node already in the management structure, and
the data processing device is arranged to define the name of the node in accordance with the case sensitivity information by either distinguishing between the upper-case and lower-case letters, or not distinguishing between them.

12. A data processing device as claimed in any one of claims 8 to 11, **characterized in that**
the case sensitivity information associated with a first node is set to also apply to a second node, and
the data processing device is arranged to check the case sensitivity information of the first node in response to a need to check the case sensitivity information of the second node, and
the data processing device is arranged to define the second node according to the case sensitivity information associated with the first node.

13. A data processing device as claimed in any one of claims 8 to 11, **characterized in that** the data processing device is arranged to serve as a device management client, and
the data processing device is arranged to refer to an already stored node and/or to add a new node to the management structure according to the case sensitivity information.

14. A data processing device as claimed in claim 13, **characterized in that** the data processing device is arranged to define the node in the management structure according to a management command received from the management server.

15. A data processing device as claimed in claim 13 or 14, **characterized in that** the data processing device is a device management client according to the OMA device management standard.

16. A data processing device as claimed in any one of claims 13, 14, or 15, **characterized in that** the data processing device is a mobile station.

17. A data processing device as claimed in any one of claims 8 to 12,**characterized in that**
the data processing device is arranged to serve as a device management server and to transmit management commands to a device management client, and
the data processing device is arranged to define the information of at least one node in the management command in accordance with the case sensitivity information.

18. A data processing device as claimed in claim 17, **characterized in that** the data processing device is a device management server according to the OMA device management standard.

19. A computer program product comprising a computer program code that is downloadable into the memory of a data processing device, **characterized in that** the computer program code, when executed in the processor of the data processing device, causes the data processing device to:
check the case sensitivity information of at least one node of a management structure comprising information managed with a device management protocol, the case sensitivity information defining whether to distinguish between upper-case and lower-case letters, and
define at least one node according to the case sensitivity information.

20. A data structure readable by a data processing device for controlling the data processing device defining nodes of a management structure comprising information to be managed by a device management protocol, **characterized in that** the data structure comprises case sensitivity information associated with at least one node for controlling the data processing device to define a node according to the case sensitivity information by either distinguishing between upper-case and lower-case letters or not distinguishing between them.

## Patentansprüche

1. Verfahren zum Definieren der Knoten einer Verwaltungsstruktur, die bei der Geräteverwaltung in einem Geräteverwaltungssystem benutzt ist, **dadurch gekennzeichnet, dass**
zumindest ein Knoten mit einer Fall-sensitiven Information (Groß-/Kleinschreibungsinformation) in Verbindung gebracht wird, die definiert, ob zwischen Großbuchstaben und Kleinbuchstaben zu unterscheiden ist, und
zumindest ein Knoten gemäß der Groß-/Kleinschreibungsinformation definiert wird (304).

2. Verfahren nach Anspruch 1, **dadurch gekennzeichnet, dass** die Eigenschaften von zumindest einem Knoten in einer Gerätebeschreibung für eine Verwaltungsstruktur definiert werden, die für zumindest ein Gerät ausgebildet ist, welches verwaltet werden soll, und die Gerätebeschreibung die Information für zumindest einen Knoten umfasst, und
die Groß-/Kleinschreibungsinformation aus der Gerätebeschreibung geprüft wird (303).

3. Verfahren nach Anspruch 1, **dadurch gekennzeichnet, dass**
die Groß-/Kleinschreibungsinformation in einer Verwaltungsstruktur definiert wird, die die Information des Geräts, das verwaltet werden soll, beschreibt, und
die Groß-/Kleinschreibungsinformation aus der Verwaltungsstruktur geprüft wird (303).

4. Verfahren nach einem der vorhergehenden Ansprüche, **gekennzeichnet durch**
Definieren der Information des Knotens im in einem Verwaltungsserver erstellten verwaltungsbefehl gemäß der Groß-/Kleinschreibungsinformation, und
Übertragen des Verwaltungsbefehls an den Verwaltungsclient, der verwaltet wird (305).

5. Verfahren nach einem der vorhergehenden Ansprüche, **gekennzeichnet durch**
Prüfen (303) der Groß-/Kleinschreibungsinformation in Reaktion auf das Erfordernis zum Erstellen eines neuen Knotens oder Verweisen auf einen bereits in der Verwaltungsstruktur befindlichen Knoten, und Definieren der Bezeichnung des Knotens gemäß der Groß-/Kleinschreibungsinformation entweder **durch** Unterscheiden zwischen den Groß- und Kleinbuchstaben oder nicht Unterscheiden dazwischen (304).

6. Verfahren nach einem der vorhergehenden Ansprüche,
**dadurch gekennzeichnet, dass**
die einem ersten Knoten zugeordnete Groß-/Kleinschreibungsinformation derart eingestellt ist, dass sie außerdem für einen zweiten Knoten gilt, und
die Groß-/Kleinschreibungsinformation des ersten Knotens in Reaktion auf ein Erfordernis, die Groß-/Kleinschreibungsinformation des zweiten Knotens zu prüfen, geprüft wird, und
der zweite Knoten gemäß der dem ersten Knoten zugeordneten Groß-/Kleinschreibungsinformation definiert wird.

7. Geräteverwaltungssystem, umfassend zumindest einen Geräteverwaltungsserver (S) und zumindest einen Geräteverwaltungsclient (TE), der verwaltet werden soll, wobei das Geräteverwaltungssystem zum Verwalten von zumindest einem Geräteverwaltungsclient mithilfe einer Verwaltungsstruktur, die zumindest einen Knoten umfasst, angeordnet ist, **dadurch gekennzeichnet, dass** der zumindest eine Knoten Groß-/Kleinschreibungsinformation zugeordnet ist, die definiert, ob zwischen Groß- und Kleinbuchstaben zu unterscheiden ist, und
das Geräteverwaltungssystem zum Definieren von zumindest einem Knoten gemäß der Groß-/Kleinschreibungsinformation angeordnet ist.

8. Datenverarbeitungsgerät, das zum Definieren von Knoten einer Verwaltungsstruktur angeordnet ist, die Information umfasst, welche mit einem Geräteverwaltungsprotokoll verwaltet ist, **dadurch gekennzeichnet, dass**
das Datenverarbeitungsgerät zum Prüfen der zumindest einem Knoten zugeordneten Groß-/Kleinschreibungsinformation angeordnet ist, die definiert, ob zwischen Groß- und Kleinbuchstaben zu unterscheiden ist, und
das Datenverarbeitungsgerät zum Definieren von zumindest einem Knoten gemäß der Groß-/Kleinschreibungsinformation angeordnet ist.

9. Datenverarbeitungsgerät nach Anspruch 8, **dadurch gekennzeichnet, dass** die Eigenschaften von zumindest einem Knoten in einer Gerätebeschreibung für eine Verwaltungsstruktur definiert sind, die zumindest ein Gerät ausgebildet ist, das verwaltet werden soll, und die Gerätebeschreibung die Information für zumindest einen Knoten umfasst, und
das Datenverarbeitungsgerät zum Prüfen der Groß-/Kleinschreibungsinformation aus der Gerätebeschreibung angeordnet ist.

10. Datenverarbeitungsgerät nach Anspruch 8, **dadurch gekennzeichnet, dass** die Groß-/Kleinschreibungsinformation in der Verwaltungsstruktur definiert ist, die die Information des Geräts beschreibt, welches verwaltet werden soll, und
das Datenverarbeitungsgerät zum Prüfen der Groß-/Kleinschreibungsinformation aus der Verwaltungsstruktur angeordnet ist.

11. Datenverarbeitungsgerät nach einem der Ansprüche 8 bis 10, **dadurch gekennzeichnet, dass** das Datenverarbeitungsgerät zum Prüfen der Groß-/Kleinschreibungsinformation in Reaktion auf ein Erfordernis zum Erstellen eines neuen Knotens oder verweisen auf einen bereits in der Verwaltungsstruktur befindlichen Knoten angeordnet ist, und
das Datenverarbeitungsgerät zum Definieren der Bezeichnung des Knotens gemäß der Groß-/Kleinschreibungsinformation entweder durch Unterscheiden zwischen den Groß- und Kleinbuchstaben oder nicht Unterscheiden dazwischen angeordnet ist.

12. Datenverarbeitungsgerät nach einem der Ansprüche 8 bis 11, **dadurch gekennzeichnet, dass**
die einem ersten Knoten zugeordnete Groß-/Kleinschreibungsinformation derart eingestellt ist, dass sie außerdem für einen zweiten Knoten gilt, und
das Datenverarbeitungsgerät zum Prüfen der Groß-/Kleinschreibungsinformation des ersten Knotens in Reaktion auf das Erfordernis zum Prüfen der Groß-/Kleinschreibungsinformation des zweiten Knotens angeordnet ist, und
das Datenverarbeitungsgerät zum Definieren des zweiten Knotens gemäß der dem ersten Knoten zugeordneten Groß-/Kleinschreibungsinformation angeordnet ist.

13. Datenverarbeitungsgerät nach einem der Ansprüche 8 bis 11, **dadurch gekennzeichnet, dass** das Datenverarbeitungsgerät zum Dienen als ein Geräteverwaltungsclient angeordnet ist, und
das Datenverarbeitungsgerät zum Verweisen auf einen bereits gespeicherten Knoten und/oder zum Hinzufügen eines neuen Knotens zu der Verwaltungsstruktur gemäß der Groß-/Kleinschreibungsinformation angeordnet ist.

14. Datenverarbeitungsgerät nach Anspruch 13, **dadurch gekennzeichnet, dass** das Datenverarbeitungsgerät zum Definieren des Knotens in der Verwaltungsstruktur gemäß einem vom Verwaltungsserver empfangenen Verwaltungsbefehls angeordnet ist.

15. Datenverarbeitungsgerät nach einem der Ansprüche 13 oder 14, **dadurch gekennzeichnet, dass** das Datenverarbeitungsgerät ein Geräteverwaltungsclient gemäß dem OMA-Geräteverwaltungsstandard ist.

16. Datenverarbeitungsgerät nach einem der Ansprüche 13, 14 oder 15, **dadurch gekennzeichnet, dass** das Datenverarbeitungsgerät eine Mobilstation ist.

17. Datenverarbeitungsgerät nach einem der Ansprüche 8 bis 12, **dadurch gekennzeichnet, dass**
das Datenverarbeitungsgerät zum Dienen als ein Geräteverwaltungsserver und zum Übertragen von Verwaltungsbefehlen an einen Geräteverwaltungsclient angeordnet ist, und
das Datenverarbeitungsgerät zum Definieren der Information von zumindest einem Knoten in dem Verwaltungsbefehl gemäß der Groß-/Kleinschreibungsinformation angeordnet ist.

18. Datenverarbeitungsgerät nach Anspruch 17, **dadurch gekennzeichnet, dass** das Datenverarbeitungsgerät ein Geräteverwaltungsserver gemäß dem OMA-Geräteverwaltungsstandard ist.

19. Computerprogrammerzeugnis, umfassend einen Computerprogrammcode, der in den Speicher eines Datenverarbeitungsgeräts herunterladbar ist, **dadurch gekennzeichnet, dass** der Computerprogrammcode bei seiner Ausführung im Prozessor des Datenverarbeitungsgeräts bewirkt, dass das Datenverarbeitungsgerät
die Groß-/Kleinschreibungsinformation von zumindest einem Knoten einer Verwaltungsstruktur, die Information umfasst, welche mit einem Geräteverwaltungsprotokoll verwaltet ist, prüft, wobei die Groß-/Kleinschreibungsinformation definiert, ob zwischen Groß- und Kleinbuchstaben zu unterscheiden ist, und
zumindest einen Knoten gemäß der Groß-/Kleinschreibungsinformation definiert.

20. Datenstruktur, die von einem Datenverarbeitungsgerät zum Steuern des Datenverarbeitungsgeräts lesbar ist, welches Knoten einer Verwaltungsstruktur definiert, die Information umfasst, welche von einem Geräteverwaltungsprotokoll verwaltet werden soll, **dadurch gekennzeichnet, dass** die Datenstruktur Groß-/Kleinschreibungsinformation, die zumindest einem Knoten zugeordnet ist, zum Steuern des Datenverarbeitungsgeräts zum Definieren eines Knotens gemäß der Groß-/Kleinschreibungsinformation entweder durch Unterscheiden zwischen Groß- und Kleinbuchstaben oder nicht Unterscheiden dazwischen.

## Revendications

1. Procédé de définition des noeuds d'une structure de gestion utilisée dans la gestion de dispositifs dans un système de gestion de dispositifs,
**caractérisé en ce que**
au moins un noeud est associé à des informations de sensibilité à la casse qui défnissent s'il convient de faire la différence entre majuscules et minuscules, et
au moins un noeud est défini selon les informations de sensibilité à la casse (304).

2. Procédé selon la revendication 1, **caractérisé en ce que** les propriétés d'au moins un noeud sont définies dans une description de dispositif pour une structure de gestion formée pour au moins un dispositif à gérer, et la description de dispositif comprend lesdites informations pour au moins un noeud, et
les informations de sensibilité à la casse sont vérifiées d'après la description de dispositif (303).

3. Procédé selon la revendication 1, **caractérisé en ce que**
les informations de sensibilité à la casse sont définies dans une structure de gestion décrivant les informations du dispositif à gérer, et
les informations de sensibilité à la casse sont vérifiées d'après la structure de gestion (303).

4. Procédé selon l'une quelconque des revendications précédentes, **caractérisé par** les étapes consistant à
définir les informations du noeud dans la commande de gestion générée dans un serveur de gestion selon les informations de sensibilité à la casse, et
transmettre la commande de gestion au client de gestion en cours de gestion (305).

5. Procédé selon l'une quelconque des revendications précédentes, **caractérisé par** l'étape consistant à
vérifier (303) les informations de sensibilité à la casse en réponse à un besoin de créer un nouveau noeud ou de se référer à un noeud déjà dans la structure de gestion, et définir le nom du noeud selon les informations de sensibilité à la casse en faisant la différence entre majuscules et minuscules ou en ne pas faisant la différence entre celles-ci (304).

6. Procédé selon l'une quelconque des revendications précédentes,
**caractérisé en ce que**
les informations de sensibilité à la casse associées à un premier noeud sont réglées pour s'appliquer également à un deuxième noeud, et
les informations de sensibilité à la casse du premier noeud sont vérifiées en réponse à un besoin de vérifier les informations de sensibilité à la casse du deuxième noeud, et
le deuxième noeud est défini selon les informations de sensibilité à la casse associées au premier noeud.

7. Système de gestion de dispositifs, comprenant au moins un serveur de gestion de dispositifs (S) et au moins un client de gestion de dispositifs (TE) à gérer, le système de gestion de dispositifs étant agencé pour gérer au moins un client de gestion de dispositifs au moyen d'une structure de gestion comprenant au moins un noeud, **caractérisé en ce qu'**au moins un noeud est associé avec des informations de sensibilité à la casse définissant s'il convient de faire la différence entre majuscules et minuscules, et
le système de gestion de dispositif est agencé pour définir au moins un noeud selon les informations de sensibilité à la casse.

8. Dispositif de traitement de données agencé pour définir des noeuds d'une structure de gestion comprenant des informations gérées avec un protocole de gestion de dispositifs, **caractérisé en ce que**
le dispositif de traitement de données est agencé pour vérifier les informations de sensibilité à la casse associées avec au moins un noeud qui définit s'il convient de faire la différence entre majuscules et minuscules, et
le dispositif de traitement de données est agencé pour définir au moins un noeud selon les informations de sensibilité à la casse.

9. Dispositif de traitement de données selon la revendication 8, **caractérisé en ce que** les propriétés d'au moins un noeud sont définies dans une description de dispositif pour une structure de gestion formée pour au moins un dispositif à gérer, et la description de dispositif comprend les informations pour au moins un noeud, et
le dispositif de traitement de données est agencé pour vérifier les informations de sensibilité à la casse d'après la description de dispositif.

10. Dispositif de traitement de données selon la revendication 8, **caractérisé en ce que** les informations de sensibilité à la casse sont définies dans une structure de gestion décrivant les informations du dispositif à gérer, et
le dispositif de traitement de données est agencé pour vérifier les informations de sensibilité à la casse provenant de la structure de gestion.

11. Dispositif de traitement de données selon l'une quelconque des revendications 8 à 10, **caractérisé en ce que** le dispositif de traitement de données est agencé pour vérifier les informations de sensibilité à la casse en réponse à un besoin de créer un nouveau noeud ou de référencer un noeud déjà dans la structure de gestion, et
le dispositif de traitement de données est agencé pour définir le nom du noeud selon les informations de sensibilité à la casse en faisant la différence entre les majuscules et les minuscules ou en ne pas faisant la différence entre celles-ci.

12. Dispositif de traitement de données selon l'une quelconque des revendications 8 à 11, **caractérisé en ce que**
les informations de sensibilité à la casse associées à un premier noeud sont réglées pour s'appliquer également à un deuxième noeud, et
le dispositif de traitement de données est agencé pour vérifier les informations de sensibilité à la casse du premier noeud en réponse à un besoin de vérifier les informations de sensibilité à la casse du deuxième noeud, et
le dispositif de traitement de données est agencé pour définir le deuxième noeud selon les informations de sensibilité à la casse associées au premier noeud.

13. Dispositif de traitement de données selon l'une quelconque des revendications 8 à 11, **caractérisé en ce que** le dispositif de traitement de données est agencé pour servir de client de gestion de dispositifs, et
le dispositif de traitement de données est agencé pour faire référence à un noeud déjà stocké et/ou ajouter un nouveau noeud à la structure de gestion selon les informations de sensibilité à la casse.

14. Dispositif de traitement de données selon la revendication 13, **caractérisé en ce que** le dispositif de traitement de données est agencé pour définir le noeud dans la structure de gestion selon une commande de gestion reçue du serveur de gestion.

15. Dispositif de traitement de données selon la revendication 13 ou 14, **caractérisé en ce que** le dispositif de traitement de données est un client de gestion de dispositifs selon la norme de gestion de dispositifs OMA.

16. Dispositif de traitement de données selon l'une quelconque des revendications 13, 14 ou 15, **caractérisé en ce que** le dispositif de traitement de données est une station mobile.

17. Dispositif de traitement de données selon l'une quelconque des revendications 8 à 12, **caractérisé en ce que**
le dispositif de traitement de données est agencé pour servir de serveur de gestion de dispositifs et transmettre des commandes de gestion à un client de gestion de dispositifs, et
le dispositif de traitement de données est agencé pour définir les informations d'au moins un noeud dans la commande de gestion selon les informations de sensibilité à la casse.

18. Dispositif de traitement de données selon la revendication 17, **caractérisé en ce que** le dispositif de traitement de données est un serveur de gestion de dispositifs selon la norme de gestion de dispositifs OMA.

19. Produit de programme informatique, comprenant un code de programme informatique qui est téléchargeable dans la mémoire d'un dispositif de traitement de données, **caractérisé en ce que** le code de programme informatique, lorsqu'il est exécuté dans le processeur du dispositif de traitement de données, amène le dispositif de traitement de données à :
vérifier les informations de sensibilité à la casse d'au moins un noeud d'une structure de gestion comprenant des informations gérées avec un protocole de gestion de dispositifs, les informations de sensibilité à la casse définissant s'il convient de faire la différence entre majuscules et minuscules, et
définir au moins un noeud selon les informations de sensibilité à la casse.

20. Structure de données lisibles par un dispositif de traitement de données pour commander le dispositif de traitement de données définissant des noeuds d'une structure de gestion comprenant des informations à gérer par un protocole de gestion de dispositifs, **caractérisée en ce que** la structure de données comprend des informations de sensibilité à la casse associées à au moins un noeud pour commander le dispositif de traitement de données pour définir un noeud selon les informations de sensibilité à la casse en faisant la différence entre majuscules et minuscules ou en ne pas faisant la différence entre celles-ci.
